# EUROPEAN PATENT SPECIFICATION

(11) **EP 0 734 418 B1**
(45) Date of publication and mention of the grant of the patent: **29.07.1998**
(21) Application number: 95901904.3
(22) Date of filing: 14.11.1994
(51) Int. Cl.: C08L 67/02, C08L 101/06

(54) **IMPACT-MODIFIED POLYMER BLENDS CONTAINING A LIQUID CRYSTALLINE POLYMER**
SCHLAGFESTE FLÜSSIGKRISTALLINE POLYMER ENTHALTENDE POLYMERMISCHUNGEN
MELANGES DE POLYMERES DONT LA RESISTANCE AUX CHOCS EST MODIFIEE CONTENANT UN POLYMERE CRISTALLIN LIQUIDE

(30) Priority: 30.11.1993 US 160006
(43) Date of publication of application: 02.10.1996
(73) Proprietor: EASTMAN CHEMICAL COMPANY, Kingsport, TN 37660 (US)
(72) Inventor: STACK, Gary, Michael, Kingsport, TN 37663 (US); STEWART, Mark, Edward, Kingsport, TN 37664-5188 (US); SEYMOUR, Robert, William, Kinsport, TN 37664 (US)
(74) Representative: Wibbelmann, Jobst, Dr., Dipl.-Chem.
(86) International application number: US9413126
(87) International publication number: WO9515360

(56) References cited:
- US-A- 4 083 829
- US-A- 5 206 291
- PATENT ABSTRACTS OF JAPAN, Vol 017, no 582 (C-1123) 22 October 1993; & JP,A,05171016 (INOUE KAZUNARI) 9 July 1993, Abstract

## Description

### Field of the Invention

This invention relates to polymer blends in which a liquid crystalline polymer is blended with a polymer which contains an epoxy functionality.

### Background of the Invention

The blending of liquid crystalline polymers with isotropic polymers to obtain mechanical property improvements is known.

For example, a blend of 85-95 weight % wholly aromatic liquid crystalline polyester (LCP) with 5-15 weight % of a polyalkylene terephthalate which resulted in improved mechanical properties is described in United States Patent 4,451,611.

Similarly, blending 5-75 weight % polycarbonate with 25-95 weight % of a wholly aromatic liquid crystalline polyester resulted in improved tensile and flexural properties as described in United States Patent 4,460,735.

In the prior art, addition of LCP's to isotropic polymers often produces materials with improved strength, stiffness and processability, but generally at the expense of decreasing impact strength with increasing LCP concentration.

In the present invention, a small amount of liquid crystalline polyester is added to modify the properties of a non-polyester matrix polymer. Surprisingly, the incorporation of epoxy functionality into the matrix polymer prevents the concomitant decrease in its impact strength normally associated with incorporation of the LCP.

There are no known patents which describe the addition of a liquid crystalline polyester to a polymer containing a reactive group, though blends of epoxy-modified polymers with other polyesters have been reported. The use of epoxy-functional polymers in blends with polyesters such as polyethylene terephthalate and polybutylene terephthalate is disclosed, for example, in United States Patent 4,284,540. This patent describes the addition of a minor amount of epoxy-modified polymer to the polyester matrix to modify the properties of the polyester.

Additional blends of polyesters with small amounts of epoxy-modified polymers are disclosed in United States Patent 5,206,291. In the prior art, it is generally found that a minor amount of an appropriate epoxy-modified polymer can be effective at raising the impact strength of the polyester composition and that this increase in impact strength is accompanied by an undesired decrease in modulus.

In the compositions of the present invention, a minor amount of a liquid crystalline polyester is added to an isotropic polymer matrix containing epoxy-functionality. A surprising balance of impact strength and modulus is obtained with blends of this invention. JP-A-51-71016 discloses a blend containing (a) 5-69 parts by weight of an epoxy-modified polyphenylene ether, (b) 1-40 parts by weight of a liquid crystalline polyester and (c) 30-94 parts by weight of a non-liquid crystalline polyester.

### Summary of the Invention

This invention relates to a class of such blends in which the isotropic polymer contains a reactive epoxy group.

More particularly, this invention relates to a blend comprising
(a) 2 to 30 weight percent of an isotropic epoxy functional polymer comprising recurring units from at least one epoxy functional monomer selected from the group consisting of:
   (1) one or more vinyl monomers without epoxide functionality selected from the group consisting of acrylic acid, methacrylic acid, acrylates, methacrylates, vinyl acetate, acrylonitrile, methacrylonitrile, styrene, substituted styrenes, olefins, and 1,1-alkyl olefins, and
   (2) one or more monomers having both vinyl and epoxide functionality selected from the gorup consisting of glycidyl acrylate, glycidyl methacrylate, hydroxy-alkyl acrylates, methacrylates, vinyl benzyl glycidyl ethers and epoxy butene.
(b) 2 to 50 weight percent of a liquid crystalline polyester, and
(c) 96 to 20 weight percent of an isotropic polymer which does not contain an epoxy group wherein said isotropic polymer is selected from the group consisting of polyethylene and ethyl vinyl acetate copolymer.

This invention unexpectedly results in properties which are superior to those of the isotropic polymer, including an impact strength which is unexpectedly higher than that of the isotropic polymer over a wide temperature range.

The functionality of the epoxy functional polymer of the invention should be such that the average number of epoxy groups per polymer chain, based on the number average molecular weight of the polymer, is between 1 to 100, and more preferably, between 6 and 75.

Epoxy functional comonomers useful in preparing the epoxy functional polymers of the invention are preferably present in an amount of 0.5 to 10, preferably 0.5 to 5, and more preferably 1-3 mole %.

The epoxy functional polymers may be produced by any of the polymerization techniques known in the art. A particularly useful technique is free radical copolymerization of monomers containing both vinyl and epoxide functionality such as glycidyl methacrylate (GMA). It is also possible to use epoxy functional polymers containing more than one other monomer and/or functional group.

In principle, any radically copolymerizable structure containing an epoxy (oxirane) group could be incorporated in the functional blend copolymer component. The majority of the glycidyl-functional monomers are prepared by the condensation reactions of epichlorohydrin with hydroxy-functional vinyl compounds.

The isotropic polymer preferably may be prepared by the copolymerization of one or more monomers having vinyl and epoxy functionality selected from the group consisting of glycidyl acrylate, glycidyl methacrylate, hydroxy-alkyl acrylates, methacrylates, vinyl benzyl glycidyl ethers and epoxy butene.

In general, the monomers containing both vinyl and epoxide functionality can be copolymerized with other vinyl monomers free radically. Typical vinyl monomers without epoxide functionality which can be copolymerized with the vinyl epoxides include acrylic acid, methacrylic acid, acrylates, methacrylates, vinyl acetate, acrylonitrile, methacrylonitrile, styrene, substituted styrenes, olefins, 1,1-alkyl olefins, and the like.

The vinyl monomers without epoxide functionality are preferably present in an amount of 99.5 to 95, preferably 99-97 mole %.

A preferred isotropic epoxy functional polymer is an ethylene/glycidyl methacrylate copolymer, preferably comprising 1.2 mole % glycidyl methacrylate or 2.6 mole % glycidyl methacrylate.

The preferred molecular weight of the epoxy functional polymer will depend upon the nature of the copolymer. Addition polymers typically have Mw's in the range from 50,000 to 500,000.

Alternatively, epoxy groups could be grafted onto the non-copolymerized isotropic polymer.

The liquid crystalline polymer of the invention is a melt processable partially aromatic or wholly aromatic copolyester which is capable of forming, apart from the blend, an optical anisotropic melt phase preferably at temperatures below 325°C. Liquid crystalline polyesters suitable for the present invention commonly exhibit a weight average molecular weight of 5,000 to 2,000,000 and preferably 10,000 to 100,000. Such molecular weight may be determined by standard techniques not involving the solutioning of the polymer, e.g., by end group determination via infrared spectroscopy on compression molded films. Alternatively, light scattering techniques in a pentafluorophenol solution may be employed to determine the molecular weight.

For the purposes of the present invention, the rings which are included in the polymer backbones of the polymer components commonly include substitution of at least some of the hydrogen atoms present upon a ring. Such substituents include alkyl groups of up to five carbon atoms; alkoxy groups having up to five carbon atoms; halogens; and additional aromatic rings, such as phenyl and substituted phenyl groups. Halogens which may be listed as possible subtituents include fluorine, chlorine, and bromine. Although bromine atoms tend to be released from organic compounds at high temperatures, bromine is more stable on aromatic rings than on aliphatic chains, and therefore is suitable for inclusion as a possible substituent on the rings.

The above-described polyesters, in order to be useful in the blend of the present invention, must exhibit optical anisotropy in the melt phase. These polyesters readily form liquid crystals in the melt phase and accordingly exhibit a high tendency for the polymer chains to orient in the shear direction. Such anisotropic properties are manifested at a temperature at which the wholly aromatic polyesters readily undergo melt processing to form shaped articles. The anisotropic properties may be confirmed by the use of a Leitz polarizing microscope at a magnification of 40X with the sample on a Koffler hot stage and under a nitrogen atmosphere. The melt phases of the wholly aromatic polyesters which are suitable for use in the present invention are optically anisotropic, i.e., they transmit light when examined between crossed-polarizers. By contrast, the melt of a conventional polymer will not appreciably transmit light when placed between crossed-polarizers.

The wholly aromatic polyesters described above are useful as molding resins and may also be used in the formation of coatings, fibers, and films. They may be molded by injection molding and can be processed by any melt extrusion technique.

The wholly aromatic polyesters consist of at least two recurring moieties each of which contributes at least one aromatic ring to the polymer backbone after being combined in the polyester.

Wholly aromatic polyester resins long have been known. For instance, 4-hydroxybenzoic acid homopolymer and copolymers have been provided in the past and are commercially available. Certain of the wholly aromatic polyesters encountered in the prior art tend to be somewhat intractable in nature and to present substantial difficulties if one attempts to melt process the same while employing conventional melt processing techniques. Such polymers are typically crystalline in nature, relatively high melting or possess a decomposition temperature which is below the melting point, and when molten, frequently exhibit an isotropic melt phase. Molding techniques such as compression molding or sintering may be utilized with such materials; however, injection molding, melt spinning, etc., commonly have not been viable alternatives or when attempted commonly have been accomplished with difficulty.

It is to be understood that the wholly aromatic polyesters which are suitable for use in the present invention are limited to those which are capable of undergoing melt phase processing, i.e., those which exhibit no substantial decomposition at or below the melting temperature.

The wholly aromatic polyesters which are suitable for use in the present invention may be formed by a variety of ester-forming techniques whereby organic monomer compounds possessing functional groups which upon condensation form the requisite recurring moieties are reacted. For instance, the functional groups of the organic monomer compounds may be carboxylic acid groups, hydroxyl groups, ester groups, acyloxy groups, acid halides, etc.

The organic monomer compounds may be reacted in the absence of a heat exchange fluid via a melt acidolysis procedure. Also, they may be heated initially to form a melt solution of the reactants with the reaction continuing as solid polymer particles are suspended therein. A vacuum may be applied to facilitate removal of volatiles formed during the final stage of the condensation (e.g., acetic acid or water).

Also, a slurry polymerization process may be employed as shown in United States Patent 4,083,829. In such a process, the solid product is suspended in a heat exchange medium.

When employing either the melt acidolysis procedure of the slurry procedure, the organic monomer reactants from which the wholly aromatic polyesters are derived may be initially provided in a modified form whereby the usual hydroxy groups of such monomers are esterified (i.e., they are provided as lower acyl esters). The lower acyl groups preferably have about two to about four carbon atoms. Preferably, the acetate esters of organic monomer reactants are provided.

Representative catalysts which optionally may be employed in either the melt acidolysis procedure or in the slurry procedure described above include dialkyl tin oxide (e.g., dibutyl tin oxide), diaryl tin oxide, titanium alkoxides, alkali and alkaline earth metal salts of carboxylic acids (e.g., zinc acetate), the gaseous acid catalysts, such as Lewis acids (e.g., BF₃), hydrogen halides (e.g., HCl), etc. The quantity of catalyst utilized typically is about 0.001 to about 1 percent by weight based upon the total monomer weight, and most commonly about 0.01 to 0.2 percent by weight.

The wholly aromatic polyesters suitable for use in the present invention tend to be substantially insoluble in common polyester solvents and accordingly are not susceptible to solution processing. As discussed previously, they can be readily processed by common melt processing techniques. Most suitable wholly aromatic polyesters are soluble in pentafluorophenol/1,2,4-trichlorobenzene mixtures.

Examples of preferred wholly aromatic polyesters suitable for the present invention are disclosed in U.S. Pat. Nos. 4, 067,852; 4,083,829; 4,130,545; 4,161,470; 4,184,996; 4,238,559; 4,238,598; and 4,256,624.

A preferred liquid crystalline polyester (A) of the invention comprises repeating units from:
(a) 2,6-naphthalenedicarboxylic acid,
(b) 4,4'-biphenol,
(c) hydroquinone, and
(d) p-hydroxybenzoic acid,
wherein the molar ratios of (b) + (c) = (a) and the molar ratios of (a) + (d) = 1.0.

Another preferred liquid crystalline polyester (B) of the invention comprises repeating units from:
(a) 2,6-napthalenedicarboxylic acid,
(b) terephthalic acid,
(c) hydroquinone, and
(d) p-hydroxybenzoic acid,
wherein molar ratios of (a) + (b) = (c) and the molar ratios of (c) + (d) = 1.0.

The mole percentages of (a) - (d) for Polyester (B) are preferably as follows:

| | |
|---|---|
| (a) | 10 to 30 mole %, |
| (b) | 10 to 30 mole %, |
| (c) | 30 to 60 mole %, |
| (d) | 40 to 80 mole %. |

The preferred liquid crystalline polyesters of the invention typically have an inherent viscosity of at least 2, and preferably 2 to 10, as determined in a 60/40 weight/weight solution of pentafluorophenol/ 1,2,4-trichlorobenzene at 25°C at a concentration of 0.1 g polyester per 100 ml solvent.

A preferred wholly aromatic copolyester consists of about 70 mole % p-hydroxybenzoic acid and about 30 mole % 2,6-hydroxynaphthoic acid.

The partially aromatic copolyesters useful in the invention typically consist of aromatic dicarboxylic acids combined with aliphatic glycols. Examples of useful aromatic dicarboxylic acids include terephthalic acid, isophthalic acid, 2-chloroterephthalic acid, 2-methylterephthalic acid, 2,5-dichloroterephthalic acid, 1,3-, 1,4-, 1,5-, 1,6-, 2,6-, or 2,7-napthalenedicarboxylic acid, trans-4,4'-stilbenedicarboxylic acid and 4,4'-biphenyldicarboxylic acid.

Examples of aliphatic glycols useful in preparing the partially aromatic copolyesters of the invention include ethlyene glycol, 1,6 hexanediol, 1,2-propylene glycol, 1,3-propanediol, 2,2-dimethyl-1,3-propanediol, 1,4-butanediol, 1,5-pentanediol, 1,3- or 1,4-cyclohexane-dimethanol(cis or trans), 2,2,4,4-tetramethyl-1,3-cyclobutanediol, and p-xylenediol.

Other examples of partially aromatic polyesters suitable for the present invention are disclosed in U.S. Pat. Nos. 3,778,410; 3,804,805; 3,842,040; 4,082,731; 4,459,402; and 4,973,654.

Furthermore, additional components such as stabilizers, fillers, flame retardants, colorants, additional polymers, impact modifiers, nucleating agents, mold release agents, additional catalysts, and other additives known to those skilled in the art may be present during the melt blending step or added subsequently.

In addition, hydroxybenzoic acids or a small amount of aliphatic dicarboxylic acids may be incorporated into the polyester.

A preferred partially aromatic copolyester is produced by modifying poly(ethylene terephthalate) with about 60 mole % p-hydroxybenzoic acid.

The present invention is also directed to molded objects regardless of the specific methodology employed for their preparation. Injection molding is particularly preferred, however.

The blends are compounded in the melt, for example by using a single screw or twin screw extruder. Furthermore, additional components such as stabilizers, fillers, flame retardants, colorants, additional polymers, impact modifiers, nucleating agents, mold release agents, additional catalysts, and other additives known to those skilled in the art may be present during the melt blending step or added subsequently.

This invention can be further illustrated by the following examples of preferred embodiments thereof.

### EXAMPLES

The invention is illustrated for the following liquid crystalline polymers:
LCP A: Vectra A950, a product of Hoechst-Celanese. A wholly aromatic copolyester consisting of 70 mole percent p-hydroxybenzoic acid and 30 mole percent 2,6-hydroxynapthoic acid.
LCP B: Rodrun 3000, a product of the Unitika Chemical Company. A partially aromatic copolyester produced by modifying poly(ethylene terephthalate) with 60 mole percent p-hydroxybenzoic acid.

The following isotropic polymers were used.
EGMA 2C: Igetabond 2C, a product of Sumitomo Chemical Co. Ethylene/glycidyl methacrylate copolymer containing 1.2 mole % glycidyl methacrylate (GMA). Weight average molecular weight is 123,000; Mw/Mn = 6.0. Melt index = 3.0 g/10 min. Approximately 10 GMA groups per chain. (Invention)
EGMA E: Igetabond E from Sumitomo, 2.6 mole % GMA. Mw = 123,000; Mw/Mn = 5.6. Melt index = 3.0 g/10 min. Approximately 20 GMA groups per chain. (Invention)
EVA: Elvax 760, E.I. DuPont. Vinyl acetate concentration 9.3 wt % (3.3 mole%); Melt index = 2.0 g/10 min.
PE: Tenite 1550 low density polyethylene.

### Example 1 (Comparative):

EGMA E was blended with 10 and 20 weight percent of LCP A. The blends were compounded at 270°C and injection molded at 270°C. The data are shown in Table 1. Incorporation of the LCP causes an unexpected increase in the impact strength of the blends at all three measurement temperatures.

### Example 2: (Comparative)

For comparison purposes, both PE and EVA were blended with the higher concentration of 20 weight percent of LCP A. EVA is a modified polyethylene, but it does not contain epoxy modification. PE is an unmodified polyethylene. Samples were compounded at 270°C and injection molded at 270°C. The data are shown in Table 2. At the two higher measurement temperatures, addition of the LCP causes a significant decrease in the impact strength of the unmodifed polyethylene. The impact strength of the EVA blend remains constant at 23°C and a small decrease is observed at 0°C. At the lowest measurement temperature of -40°C, addition of the LCP causes a very large decrease in impact strength for both of these polyethylenes. These results demonstrate that it is the epoxy functionality of the modified polyolefin in Example 1 which yields the unexpected results.

### Example 3 (Comparative):

EGMA 2C was blended with 15 and 30 weight percent of LCP B. The blends were compounded at 200°C and injection molded at 270°C. The data are shown in Table 3. Incorporation of the LCP causes a significant increase in the flexural modulus of the EGMA 2C. Concomitantly there is also an unexpected increase in the impact strength of the blends.

### Example 4: (Comparative)

PE was blended with 30 weight percent of LCP B. This blend was also compounded at 200°C and injection molded at 270°C. The data are shown in Table 4. Addition of the LCP causes an increase in flexural modulus which is comparable to that observed in Example 3. However, the blend has an impact strength which is significantly reduced from that of the pure polyethylene.

### Example 5:

In this example, PE was pre-blended with 6 and 21 weight percent of EGMA E. The 6% pre-blend was then compounded with 15 weight percent of LCP B and the 21% pre-blend was compounded with 30 weight percent of LCP B. The data are shown in Table 5. Addition of the LCP to these PE-EGMA E blends results in an increase in impact strength over that measured for the pure polyethylene. The data shown previously in Table 4 indicated that the addition of LCP B to unmodified PE results in a large reduction in impact strength. Comparison of those results to the present example demonstrates that it is the pre-blending with EGMA-E which causes the observed increase in impact strength upon addition of LCP B.

**Table 1.**

| The effect of LCP A on the impact strength of EGMA E. | | | | |
|---|---|---|---|---|
| %LCP A | | 0. | 10. | 20. |
| Unnotched Izod, | 23°C | 4.5 | 5.8 | 6.1 |
| ft-lb/in | 0°C | 8.3 | 9.3 | 11.6 |
| | -40°C | 23.5 | 26.3 | 31.7 |

**Table 2.**

| The effect of LCP A on the impact strength of PE and EVA. | | | | | |
|---|---|---|---|---|---|
| | | PE | | EVA | |
| %LCP A | | 0. | 20. | 0. | 20. |
| Unnotched Izod, | 23°C | 9.2 | 4.3 | 5.8 | 5.9 |
| ft-lb/in | 0°C | 12.3 | 3.5 | 9.0 | 5.1 |
| | -40°C | 25.4 | 3.3 | 23.4 | 3.6 |

**Table 3.**

| The effect of LCP B on the impact strength and flexural modulus of EGMA 2C. | | | |
|---|---|---|---|
| %LCP B | 0. | 15. | 30. |
| Unnotched Izod, 23°C ft-lb/in | 7.5 | 10.1 | 13.4 |
| Flexural modulus 10⁵ PSI | 0.10 | 0.27 | 1.00 |

**Table 4.**

| The effect of LCP B on the impact strength and flexural modulus of PE. | | | |
|---|---|---|---|
| %LCP B | | 0. | 30. |
| Unnotched Izod, ft-lb/in | 23°C | 8.0 | 2.8 |
| Flexural modulus, 10⁵ PSI | | 0.12 | 1.41 |

**Table 5.**

| The effect of LCP B on the impact strength of PE/EGMA E blends. | | | | |
|---|---|---|---|---|
| % LCP B | | 0 | 15 | 30 |
| Polyolefin | | PE | PE(6%EGMA E) | PE(21% EGMAE) |
| Unnotched Izod, | 23°C | 8.8 | 11.2 | 13.1 |
| ft-lb/in | 0°C | 13.7 | 16.4 | 18.6 |

The invention has been described in detail with particular reference to preferred embodiments thereof.

## Claims

1. A blend comprising:
(a) 2 to 30 weight percent of an isotropic epoxy functional polymer comprising recurring units from at least one epoxy functional monomer selected from the group consisting of:
(1) one or more vinyl monomers without epoxide functionality selected from the group consisting of acrylic acid, methacrylic acid, acrylates, methacrylates, vinyl acetate, acrylonitrile, methacrylonitrile, styrene, substituted styrenes, olefins, and 1,1-alkyl olefins, and
(2) one or more monomers having both vinyl and epoxide functionality selected from the gorup consisting of glycidyl acrylate, glycidyl methacrylate, hydroxy-alkyl acrylates, methacrylates, vinyl benzyl glycidyl ethers and epoxy butene.
(b) 2 to 50 weight percent of a liquid crystalline polyester, and
(c) 96 to 20 weight percent of an isotropic polymer which does not contain an epoxy group wherein said isotropic polymer is selected from the group consisting of polyethylene and ethyl vinyl acetate copolymer.

2. The blend of claim 1 wherein (a) is present in an amount of 5 to 20 weight percent, (b) is present in an amount of 5 to 30 weight percent, and (c) is present in an amount of 90 to 50 weight percent.

3. The blend of claim 1 wherein said liquid crystalline polyester is present in an amount of 10-20 weight %.

4. The blend of claim 1 wherein the average number of said epoxy groups per isotropic epoxy functional polymer chain is from 1 and 100.

5. The blend of claim 4 wherein the average number of said epoxy groups per isotropic epoxy functional polymer chain is from 6 to 75.

6. The blend of claim 1 wherein said epoxy functional monomer is present in an amount of 0.5 to 5.0 mole percent.

7. The blend of claim 6 wherein said epoxy functional polymer is present in an amount of 1.0 to 3.0 mole percent.

8. The blend of claim 1 wherein said isotropic polymer which does not contain an epoxy group is polyethylene.

9. The blend of claim 1 wherein said addition polymer has a weight average molecular weight of from 50,000 to 500,000.

10. The blend of claim 1 wherein the mole percent of (1) is 99.5 to 95, based on the polymer.

11. The blend of claim 10 wherein the mole percent of (1) is 99.0 to 97.0, based on the polymer.

12. The blend of claim 1 wherein said isotropic polymer is an ethylene/glycidyl methacrylate copolymer.

13. The blend of claim 12 wherein said ethylene/glycidyl methacrylate copolymer comprises 1.2 mole % glycidyl methacrylate, based on the copolymer.

14. The blend of claim 12 wherein said ethylene/glycidyl methacrylate copolymer comprises 2.6 mole % glycidyl methacrylate, based on the copolymer.

15. The blend of claim 1 wherein said liquid crystalline polyester is a wholly aromatic copolyester.

16. The blend of claim 15 wherein said liquid crystalline polyester has an inherent viscosity of at least 2 as determined in a 60/40 weight/weight solution of pentafluorophenol/1,2,4-trichlorobenzene at 25°C at a concentration of 0.1 g polyester per 100 ml solvent.

17. The blend of claim 16 wherein said liquid crystalline polyester has an inherent viscosity of 2 to 10 as determined in a 60/40 weight/weight solution of pentafluorophenol/l,2,4-trichlorobenzene at 25°C at a concentration of 0.1 g polyester per 100 ml solvent.

18. The blend of claim 15 wherein said liquid crystalline polyester comprises repeat units from:
(a) 2,6-naphthalenedicarboxylic acid,
(b) 4,4'-biphenol,
(c) hydroquinone, and
(d) p-hydroxybenzoic acid,
wherein the molar ratios of (b) + (c) = (a) and the molar ratios of (a) + (d) = 1.0.

19. The blend of claim 15 wherein said liquid crystalline polyester comprises repeat units from:
(a) 2,6-naphthalenedicarboxylic acid,
(b) terephthalic acid,
(c) hydroquinone, and
(d) p-hydroxy benzoic acid
wherein the molar ratios (a) + (b) = (c) and the molar ratios of (c) + (d) = 1.0.

20. The blend of claim 19 wherein the mole percentages of (a) - (d) comprise the following:
(a) 10 to 30 mole %,
(b) 10 to 30 mole %,
(c) 30 to 60 mole %, and
(d) 40 to 80 mole %.

21. The blend of claim 15 wherein said wholly aromatic copolyester consists of 70 mole % p-hydroxybenzoic acid and 30 mole % 2,6-hydroxynapthoic acid.

22. A molded object prepared using the blend of claim 15.

23. The blend of claim 1 wherein said liquid crystalline polyester is a partially aromatic copolyester.

24. The blend of claim 23 wherein said partially aromatic polyester is produced by modifying poly(ethylene terephtalate) with 60 mole % p-hydroxybenzoic acid.

## Patentansprüche

1. Mischung, umfassend:
(a) 2 bis 30 Gew.-% eines isotropen epoxyfunktionellen Polymers, umfassend wiederkehrende Einheiten von mindestens einem epoxyfunktionellen Monomer, gewählt aus der Gruppe bestehend aus:
(1) ein oder mehreren Vinylmonomeren ohne Epoxidfunktionalität, gewählt aus der Acrylsäure, Methacrylsäure, Acrylate, Methacrylate, Vinylacetat, Acrylnitril, Methacrylnitril, Styrol, substituierte Styrole, Olefine und 1,1-Alkylolefine umfassenden Gruppe und
(2) ein oder mehreren Monomeren mit sowohl Vinyl- als auch Epoxidfunktionalität, gewählt aus der Glycidylacrylat, Glycidylmethacrylat, Hydroxyalkylacrylate, Methacrylate, Vinylbenzylglycidylether und Epoxybuten umfassenden Gruppe;
(b) 2 bis 50 Gew.-% eines flüssigkristallinen Polyesters und
(c) 96 bis 20 Gew.-% eines isotropen Polymers, welches keine Epoxygruppe enthält, wobei das isotrope Polymer gewählt wird aus der Polyethylen und Ethylvinylacetatcopolymer umfassenden Gruppe.

2. Mischung gemäß Anspruch 1, worin (a) in einer Menge von 5 bis 20 Gew.-% vorliegt, (b) in einer Menge von 5 bis 30 Gew.-% vorliegt und (c) in einer Menge von 90 bis 50 Gew.-% vorliegt.

3. Mischung gemäß Anspruch 1, worin der flüssigkristalline Polyester in einer Menge von 10 bis 20 Gew.-% vorliegt.

4. Mischung gemäß Anspruch 1, worin die durchschnittliche Anzahl der Epoxygruppen pro isotroper epoxyfunktioneller Polymerkette zwischen 1 und 100 liegt.

5. Mischung gemäß Anspruch 4, worin die durchschnittliche Anzahl der Epoxygruppen pro isotroper epoxyfunktioneller Polymerkette zwischen 6 und 75 liegt.

6. Mischung gemäß Anspruch 1, worin das epoxyfunktionelle Monomer in einer Menge von 0,5 bis 5,0 Mol-% vorliegt.

7. Mischung gemäß Anspruch 6, worin das epoxyfunktionelle Monomer in einer Menge von 1,0 bis 3,0 Mol-% vorliegt.

8. Mischung gemäß Anspruch 1, worin das isotrope Polymer, welches keine Epoxygruppe enthält, Polyethylen ist.

9. Mischung gemäß Anspruch 1, worin das Additionspolymer ein gewichtsmittleres Molekulargewicht von 50.000 bis 500.000 besitzt.

10. Mischung gemäß Anspruch 1, worin der Mol-%-Wert von (1) 99,5 bis 95,0 bezogen auf das Polymer, beträgt.

11. Mischung gemäß Anspruch 10, worin der Mol-%-Wert von (1) 99,0 bis 97,0 bezogen auf das Polymer, beträgt.

12. Mischung gemäß Anspruch 1, worin das isotrope Polymer ein Ethylen/Glycidylmethacrylat-Copolymer ist.

13. Mischung gemäß Anspruch 12, worin das Ethylen/Glycidylmethacrylat-Copolymer 1,2 Mol-% Glycidylmethacrylat, bezogen auf das Copolymer, umfaßt.

14. Mischung gemäß Anspruch 12, worin das Ethylen/Giycidylmethacrylat-Copolymer 2,6 Mol-% Glycidylmethacrylat, bezogen auf das Copolymer, umfaßt.

15. Mischung gemäß Anspruch 1, worin der flüssigkristalline Polyester ein gänzlich aromatischer Copolyester ist.

16. Mischung gemäß Anspruch 15, worin der flüssigkristalline Polyester eine inhärente Viskosität von mindestens 2, bestimmt in einer 60/40-(Gewicht/Gewicht)-Lösung von Pentafluorphenol/1,2,4-Trichlorbenzol, bei 25 °C bei einer Konzentration von 0,1 g Polyester pro 100 ml Lösungsmittel aufweist.

17. Mischung gemäß Anspruch 16, worin der flüssigkristalline Polyester eine inhärente Viskosität von 2 bis 10, bestimmt in einer 60/40-(Gewicht/Gewicht)-Lösung von Pentafluorphenol/1,2,4-Trichlorbenzol, bei 25 °C bei einer Konzentration von 0,1 g Polyester pro 100 ml Lösungsmittel aufweist.

18. Mischung gemäß Anspruch 15, worin der flüssigkristalline Polyester wiederkehrende Einheiten umfaßt von:
(a) 2,6-Naphthalindicarbonsäure,
(b) 4,4'-Biphenol,
(c) Hydrochinon und
(d) p-Hydroxybenzoesäure,
worin die Molverhältnisse von (b) + (c) = (a) und die Molverhältnisse von (a) + (d) = 1,0 betragen.

19. Mischung gemäß Anspruch 15, worin der flüssigkristalline Polyester wiederkehrende Einheiten umfaßt von:
(a) 2,6-Naphthalindicarbonsäure,
(b) Terephthalsäure,
(c) Hydrochinon und
(d) p-Hydroxybenzoesäure,
worin die Molverhältnisse von (a) + (b) = (c) und die Molverhältnisse von (c) + (d) = 1,0 betragen.

20. Mischung gemäß Anspruch 19, worin die Mol-%-Werte von (a) - (d) folgendes umfassen:
(a) 10 bis 30 Mol-%,
(b) 10 bis 30 Mol-%,
(c) 30 bis 60 Mol-% und
(d) 40 bis 80 Mol-%.

21. Mischung gemäß Anspruch 15, worin der gänzlich aromatische Copolyester aus 70 Mol-% p-Hydroxybenzoesäure und 30 Mol-% 2,6-Hydroxynaphthoesäure besteht.

22. Geformter Gegenstand, hergestellt unter Verwendung der Mischung von Anspruch 15.

23. Mischung gemäß Anspruch 1, worin der flüssigkristalline Polyester ein teilweise aromatischer Copolyester ist.

24. Mischung gemäß Anspruch 21, worin der teilweise aromatische Polyester hergestellt wird durch Modifizieren von Poly(ethylenterephthalat) mit 60 Mol-% p-Hydroxybenzoesäure.

## Revendications

1. Mélange comprenant:
(a) de 2 à 30 % en poids d'un polymère isotrope à fonctionnalité époxy comprenant des unités répétitives d'au moins un monomère à fonctionnalité époxy choisi dans le groupe formé par :
(1) un ou plusieurs monomères vinyliques sans fonctionnalité époxyde choisis dans le groupe formé par l'acide acrylique, l'acide méthacrylique, les acrylates, les méthacrylates, l'acétate de vinyle, l'acrylonitrile, le méthacrylonitrile, le styrène, les styrènes substitués, les oléfines, et les 1,1-alkyl-oléfines, et
(2) un ou plusieurs monomères ayant à la fois une fonctionnalité vinyle et une fonctionnalité époxyde choisis dans le groupe formé par l'acrylate de glycidyle, le méthacrylate de glycidyle, les acrylates d'hydroxyalkyle, les méthacrylates d'hydroxyalkyle, les éthers vinylbenzylglycidyle et l'époxybutène,
(b) de 2 à 50 % en poids d'un polyester cristallin liquide, et
(c) de 96 à 20 % en poids d'un polymère isotrope qui ne contient pas un groupe époxy, ledit polymère isotrope étant choisi dans le groupe formé par le polyéthylène et un copolymère éthylène acétate de vinyle.

2. Mélange selon la revendication 1, caractérisé en ce que (a) est présent en une quantité de 5 à 20 pour-cent en poids, (b) est présent en une quantité de 5 à 30 pour-cent en poids, et (c) est présent en une quantité de 90 à 50 pour-cent en poids.

3. Mélange selon la revendication 1, caractérisé en ce que ledit polyester cristallin est présent en une quantité de 10 à 20 % en poids.

4. Mélange selon la revendication 1, caractérisé en ce que le nombre moyen desdits groupes époxy par chaîne polymère isotrope à fonctionnalité époxy est de 1 à 100.

5. Mélange selon la revendication 4, caractérisé en ce que le nombre moyen desdits groupes époxy par chaîne polymère isotrope à fonctionnalité époxy est de 6 à 75.

6. Mélange selon la revendication 1, caractérisé en ce que ledit monomère à fonctionnalité époxy est présent en une quantité de 0,5 à 5,0 pour-cent en moles.

7. Mélange selon la revendication 6, caractérisé en ce que ledit monomère à fonctionnalité époxy est présent en une quantité de 1,0 à 3,0 pour-cent en moles.

8. Mélange selon la revendication 1, caractérisé en ce que ledit polymère isotrope qui ne contient pas de groupe époxy est le polyéthylène.

9. Mélange selon la revendication 1, caractérisé en ce que ledit polymère d'addition a une masse moléculaire moyenne en poids de 50 000 à 500 000.

10. Mélange selon la revendication 1, caractérisé en ce que le pourcentage en moles de (1) est de 99,5 à 95, basé sur le polymère.

11. Mélange selon la revendication 10, caractérisé en ce que le pourcentage en moles de (1) est de 99,0 à 97, 0, basé sur le polymère.

12. Mélange selon la revendication 1, caractérisé en ce que ledit polymère isotrope est un copolymère éthylène / méthacrylate de glycidyle.

13. Mélange selon la revendication 12, caractérisé en ce que ledit copolymère éthylène / méthacrylate de glycidyle comprend 1,2 % en moles de méthacrylate de glycidyle, basé sur le polymère.

14. Mélange selon la revendication 12, caractérisé en ce que ledit copolymère éthylène / méthacrylate de glycidyle comprend 2,6 % en moles de méthacrylate de glycidyle, basé sur le polymère.

15. Mélange selon la revendication 1, caractérisé en ce que ledit polyester cristallin liquide est un copolyester complètement aromatique.

16. Mélange selon la revendication 15, caractérisé en ce que ledit polyester cristallin liquide a une viscosité inhérente d'au moins 2 telle que déterminée dans une solution 60/40 poids/poids de pentafluorophénol/1,2,4-trichlorobenzène à 25 °C à une concentration de 0,1 g de polyester pour 100 ml de solvant.

17. Mélange selon la revendication 16, caractérisé en ce que ledit polyester cristallin liquide a une viscosité inhérente d'au moins 2 à 10 telle que déterminée dans une solution 60/40 poids/poids de pentafluorophénol/1,2,4-trichlorobenzène à 25 °C à une concentration de 0,1 g de polyester pour 100 ml de solvant.

18. Mélange selon la revendication 15, caractérisé en ce que ledit polyester cristallin liquide comprend des unités répétitives de:
(a) l'acide 2,6-naphtalènedicarboxylique,
(b) le 4,4'-bisphénol,
(c) l'hydroquinone, et
(d) l'acide p-hydroxybenzoïque,
dans lequel les rapports molaires de (b) + (c) = (a) et les rapports molaires (a) + (d) = 1,0.

19. Mélange selon la revendication 15, caractérisé en ce que ledit polyester cristallin liquide comprend des unités répétitives de:
(a) l'acide 2,6-naphtalènedicarboxylique,
(b) l'acide téréphtalique,
(c) l'hydroquinone, et
(d) l'acide p-hydroxybenzoïque,
dans lequel les rapports molaires de (a) + (b) = (c) et les rapports molaires (c) + (d) = 1,0.

20. Mélange selon la revendication 19, caractérisé en ce que les pourcentages en moles de (a) - (d) comprennent les suivants:
(a) 10 à 30 % en moles,
(b) 10 à 30 % en moles,
(c) 30 à 60 % en moles, et
(d) 40 à 80 % en moles.

21. Mélange selon la revendication 15, caractérisé en ce que ledit copolyester complètement aromatique consiste en 70 % en moles d'acide p-hydroxybenzoïque et 30 % en moles d'acide 2,6-hydroxynaphtoïque.

22. Objet moulé préparé en utilisant le mélange selon la revendication 15.

23. Mélange selon la revendication 1, caractérisé en ce que ledit polyester cristallin liquide est un copolyester partiellement aromatique.

24. Mélange selon la revendication 23, caractérisé en ce que ledit polyester cristallin liquide est préparé en modifiant le poly(téréphtalate d'éthylène) avec 60 % en moles d'acide p-hydroxybenzoïque.
